Europäisches Patentamt

European Patent Office

Office européen des brevets

(11) Veröffentlichungsnummer: **0 304 832 B1**

# EUROPÄISCHE PATENTSCHRIFT

(45) Veröffentlichungstag der Patentschrift: **17.06.92**

(21) Anmeldenummer: **88113567.7**

(22) Anmeldetag: **20.08.88**

(51) Int. Cl.⁵: **B29C 59/10**, //H01T19/00, B60R19/02

(54) Vorrichtung zur Oberflächenbehandlung einer Kraftfahrzeugstossstange.

(30) Priorität: **27.08.87 DE 3728585**

(43) Veröffentlichungstag der Anmeldung:
**01.03.89 Patentblatt 89/09**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
**DE-A- 3 532 813**

(73) Patentinhaber: **Schlitzer, Lothar
Marienstrasse 1
W-6402 Grossenlüder(DE)**

(72) Erfinder: **Schlitzer, Lothar
Marienstrasse 1
W-6402 Grossenlüder(DE)**
Erfinder: **Zecchin, Edwin
Maximilian-Kolbe-Strasse 2
W-6402 Grossenlüder(DE)**

(74) Vertreter: **Schlagwein, Udo, Dipl.-Ing.
Anwaltsbüro Ruppert & Schlagwein Frankfurter Strasse 34
W-6350 Bad Nauheim(DE)**

EP 0 304 832 B1

## Beschreibung

Die Erfindung betrifft eine Vorrichtung zur Oberflächenbehandlung einer Kraftfahrzeugstoßstange mittels einer Behandlungseinrichtung, insbesondere einer Koronaentladungseinrichtung.

Stoßstangen von Kraftfahrzeugen müssen oftmals über ihre gesamte Länge behandelt werden, um beispielsweise bei Kunststoffstoßstangen die Oberfläche zum Aufkleben eines Zierstreifens oder einer Gummiauflage anzurauhen. Hierzu wird derzeit von Hand ein Koronaentladungsgerät über die zu behandelnde Fläche geführt. Dieser Bearbeitungsgang ist zeitaufwendig und für den Arbeiter unangenehm auszuführen. Zusätzlich besteht ein gesundheitliches Risiko, weil man sich beim Führen des Koronaentladungsgerätes zwangsläufig in unmittelbarer Nähe der elektrischen Entladungen befinden muß, so daß die Gefahr des Einatmens von durch die Entladungen entstehenden Ozon besteht. Wird für diese Arbeiten ein Roboter eingesetzt, so sind für die Anschaffung des Roboters hohe Kosten erforderlich.

Durch die DE-A-35 32 813 ist bereits eine kontinuierlich arbeitende Vorrichtung zur Oberflächenbehandlung von Formteilen mittels Koronaentladungen bekannt, bei der eine quer zum Formteil ausgerichtete, feststehende Sprühelektrode in mehrere Elektrodenstreifen unterteilt ist. Diese Streifen können entsprechend der Kontur des Formteiles in der Höhe verstellt werden, so daß sie trotz wechselnder Kontur des Formteiles stets gleichen Abstand von dem Formteilhaben. Bei einer solchen Vorrichtung müssen vor der Koronabehandlung die einzelnen Elektrodenstreifen entsprechend der Kontur des Formteiles eingestellt werden, was eine relativ große Rüstzeit bedingt, so daß die Vorrichtung nur sinnvoll ist, wenn Formteile großer Stückzahl zu behandeln sind.

Der Erfindung liegt die Aufgabe zugrunde, eine Vorrichtung der eingangs genannten Art so zu gestalten, daß möglichst rasch und ohne gesundheitliche Risiken für die Bedienperson aufeinanderfolgend unterschiedliche Stoßstangen behandelt werden können.

Diese Aufgabe wird bei der Vorrichtung erfindungsgemäß gelöst durch die Merkmale von Anspruch 1, insbesondere durch einen Tisch zum Aufspannen der Stoßstange in eine mit ihren beiden Seitenteilen nach unten weisende Position und eine in etwa entsprechend der Stoßstange verlaufende Schiene mit einem die Behandlungseinrichtung tragenden, angetriebenen Wagen, welcher einen quer zur Haupterstreckungsrichtung der Schiene verschieblichen, die Behandlungseinrichtung tragenden Schlitten und einen Fühler zum Steuern des Abstandes des Schlittens und damit der Behandlungseinrichtung von der Stoßstange aufweist.

Eine solche Vorrichtung erlaubt es, die Stoßstangen ohne das Führen einer Behandlungseinrichtung von Hand zu behandeln, indem der Wagen mit der Behandlungseinrichtung auf der Schiene entlang der Stoßstange verfahren wird. Dadurch ist eine gleichmäßige und rasche Behandlung möglich. Die mit ihren Seitenteilen nach unten weisende Andordnung der jeweiligen Stoßstange ermöglicht es, die zu behandelnde Oberfläche ohne Mühe zu beobachten, so daß eine einfache Kontrolle der vorgenommenen Behandlung sichergestellt ist. Weiterhin ist das Aufspannen der Stoßstange bei einer solchen Anordnung sehr einfach.

Durch den quer zur Bewegungsrichtung des Wagens verschieblichen Schlitten und den Fühler wird erreicht, daß die Schiene nicht mehr genau dem Verlauf der Stoßstange entsprechen muß, da Abstandsänderungen zwischen Stoßstange und Schiene durch die Querverfahrbarkeit des Schlittens ausgeglichen werden. Dadurch können mit der erfindungsgemäßen Vorrichtung unterschiedliche Stoßstangen behandelt werden.

Der Schlitten könnte mit einer Feder zur Stoßstange hin vorgespannt und vom Fühler auf einen festgelegten Abstand gehalten sein. Die Vorrichtung arbeitet jedoch besonders reibungsarm und schwingungsfrei, wenn der Fühler einen entlang der Stoßstange verschieblichen, ein Potentiometer betätigenden Fühlfinger hat. Weiterhin kann durch diese Anordnung erreicht werden, daß der Fühler nur mit einer geringen und gleichbleibenden Kraft gegen die Stoßstange druckt, so daß auch eine dünnwandige Stoßstange nicht verformt wird.

Konstruktiv besonders einfach ist die Vorrichtung gestaltet, wenn die Schiene als mit ihren beiden Enden auf dem Boden stehende Brücke ausgebildet ist.

Zum Aufspannen und Entnehmen einer Stoßstange wird man üblicherweise den Tisch als Hubtisch ausbilden. Dieser ist besonders einfach ausgebildet, wenn er eine mittels zweier Kniehebel höhenverfahrbare Tischplatte aufweist.

Die beiden erforderlichen Kniehebel können gemeinsam über beispielsweise eine Handkurbel mittels nur einer Spindel verstellt werden, wenn gemäß einer anderen Ausgestaltung der Erfindung die beiden Kniehebel von einer gemeinsamen Spindel betätigbar sind, welche an ihren beiden, die Kniehebel betätigenden Enden Gewinde mit unterschiedlichem Drehsinn aufweist.

Die Behandlungseinrichtung kann bis über die beiden Enden der Stoßstange fahren, ohne daß dabei der Fühler sich ins Leere bewegt, wenn an beiden Seiten des Tisches im Bereich der Enden der Stoßstange Auflaufbleche zum Abstützen des Fühlers nach überfahren des jeweiligen Stoßstangenendes vorgesehen sind und wenn auf der Schiene zum Abschalten der Vorschubbewegung des Wagens im Bereich beider Stoßstangenenden jeweils ein entlang der Schiene verstellbarer Näherungsschalter vorgesehen ist.

Für den Fall eines Versagens der Näherungsschalter kommt es dennoch kurz nach Erreichen der Endstellung der jeweiligen Stoßstange zu einem zuverlässigen Abschalten des Vorschubs des Wagens, wenn in Richtung jedes Endes der Stoßstange gesehen jeweils hinter jedem Näherungsschalter ein Endschalter auf der Schiene vorgesehen ist.

Der Wagen kann auf verschiedene Weise angetrieben werden, beispielsweise durch eine in der Schiene umlaufende Kette. Besonders einfach ist der Antrieb jedoch, wenn der Wagen zum Verfahren entlang der Schienen einen ein Ritzel antreibenden Vorschubmotor aufweist und das Ritzel in eine entlang der Schiene geführte Zahnstange eingreift.

Für die Querbewegung des Schlittens wird vorteilhafterweise ein Stellmotor vorgesehen.

Besonders einfach ist der Antrieb des Schlittens gestaltet, wenn der Stellmotor fest auf dem Schlitten angeordnet ist und eine relativ zum Schlitten unverschiebbare Hubspindel antreibt, welche in eine am Wagen unverschiebbar befestigte Spindelmutter geschraubt ist.

Die Erfindung läßt zahlreiche Ausführungsformen zu. Zur weiteren Verdeutlichung ihres Grundprinzips ist eine davon in der Zeichnung dargestellt und wird nachfolgend beschieben. In ihr zeigen die

Fig. 1    eine Vorderansicht der erfindungsgemäßen Vorrichtung,

Fig. 2    eine Seitenansicht der Vorrichtung.

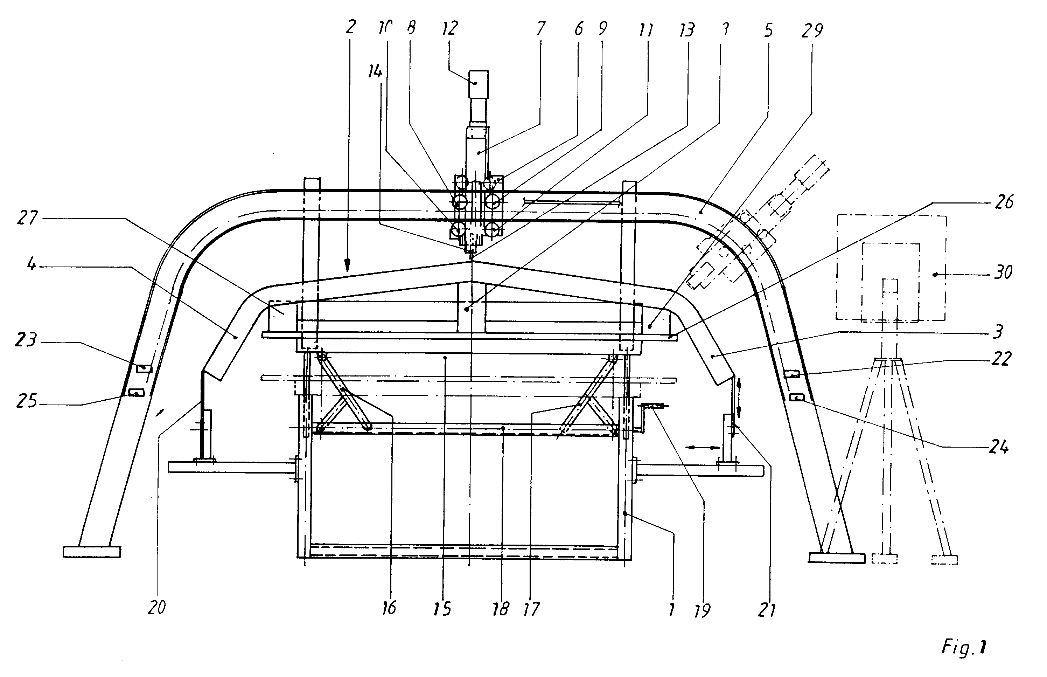

Die Figur 1 zeigt von vorn einen Tisch 1, auf dem eine Stoßstange 2 eines Personenkraftwagens derart aufgespannt ist, daß sie mit ihren Seitenteilen 3, 4 seitlich des Tisches 1 schräg nach unten weist. Oberhalb des Tisches 1 befindet sich eine Schiene 5, welche in etwa entsprechend der Stoßstange 2 verläuft, brückenartig ausgebildet ist und mit ihren beiden Enden auf dem Boden steht.

Auf der Schiene 5 ist ein Wagen 6 in Längserstreckung der Schiene 5 verfahrbar angeordnet. Dieser Wagen 6 trägt einen Schlitten 7, welcher quer zur Schiene 5 verfahrbar zwischen Rollen 8, 9, 10, 11 des Wagens 6 gehalten ist. Zum Verfahren des Schlittens 7 dient ein Stellmotor 12. Ein Fühler 13 des Schlittens 7 liegt ständig gegen die Stoßstange 2 an und vermag über eine Steuerung den Stellmotor 12 so anzusteuern, daß eine Behandlungseinrichtung 14, bei diesem Beispiel eine Koronaentladeeinrichtung, stets gleichbleibenden Abstand von der Stoßstange 2 hat.

Der Tisch 1 hat eine Tischplatte 15, an welcher zwei Kniehebel 16, 17 angelenkt sind, die von einer gemeinsamen Spindel 18 mittels einer Handkurbel 19 betätigbar sind und für die beiden Kniehebel 16, 17 Gewinde mit unterschiedlichem Drehsinn aufweist, so daß beide Kniehebel 16, 17 gleichzeitig zusammengedrückt oder gespreizt werden.

An jeder Seite des Tisches 1 ist jeweils ein Auflaufblech 20, 21 angeordnet, welches jeweils bis gegen das Ende jedes Seitenteiles 3, 4 der Stoßstange 2 reicht und zur Führung des Fühlers 13 dient, wenn sich der Wagen 6 bis über das jeweilige Ende der Stoßstange 2 bewegt hat. Näherungsschalter 22, 23, welche auf der Schiene 5 angeordnet sind, dienen dazu, den Vorschub des Wagens 5 abzuschalten, sobald dieser das jeweilige Ende der Stoßstange 2 erreicht hat. In Bewegungsrichtung jeweils hinter jedem Näherungsschalter 22, 23 ist nochmals ein Endschalter 24, 25, angeordnet durch den der Wagenvorschub abgeschaltet wird, wenn der jeweilige Näherungsschalter 22, 23 versagen sollte.

Zur Halterung der Stoßstange 2 ist auf dem Tisch 1 ein Brett 26 mit Auflageböcken 27, 28, 29 befestigt. Dieses Brett 26 ist bei Behandlung einer anders geformten Stoßstange 2 gegen ein anderes auszutauschen, welches der Stoßstange 2 angepaßte Auflageböcke 27, 28, 29 aufweist.

Strichpunktiert ist neben der Schiene 5 ein Schaltpult 30 dargestellt, welches die Steuerelektronik und die Bedienschalter aufweist.

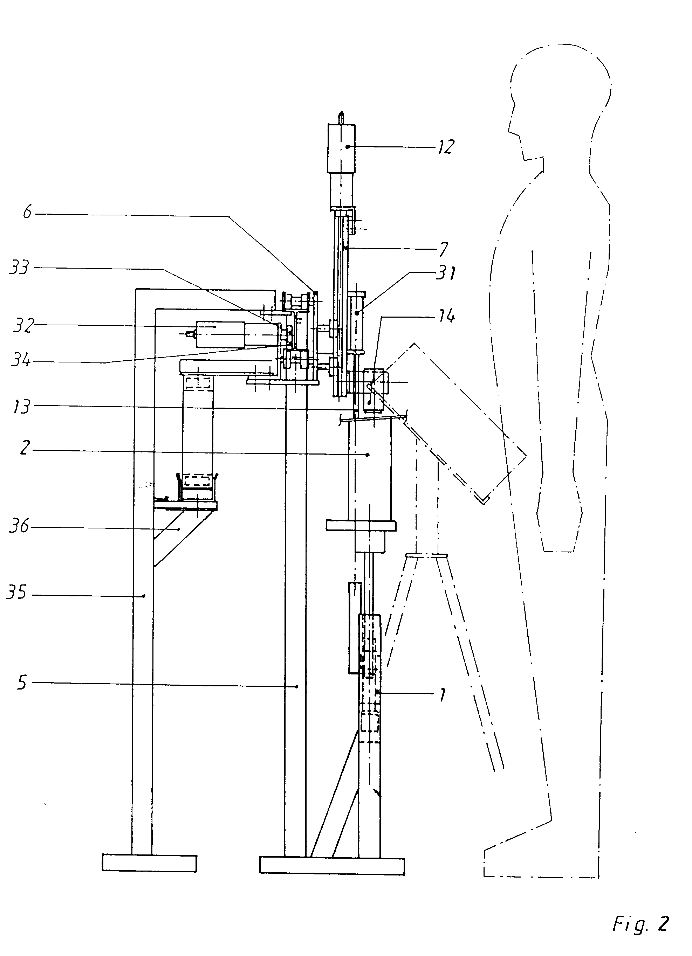

Die in Figur 2 gezeigte Seitenansicht läßt erkennen, daß sich der Schlitten 7 räumlich vor dem Wagen 6 befindet. Entsprechend ist natürlich auch der Tisch 1 etwas vorgerückt, so daß sich die Stoßstange 2 unterhalb der Behandlungseinrichtung 14 befindet. Zu erkennen ist in Figur 2 weiterhin den Fühler 13, welcher ein Potentiometer 31 betätigt, das zum Steuern des Stellmotors 12 dient.

Zum Antrieb des Wagens 6 ist am Wagen 6 ein Vorschubmotor 32 vorgesehen, welcher ein Ritzel 33 antreibt. Dieses Ritzel 33 kämmt in einer Zahnstange 34, die in Längsrichtung der Schiene 5 verläuft. Hinter der Schiene 5 ist ein Halterahmen 35 angeordnet, der die Schiene 5 zusätzlich abstützt und einen Auflagebock 36 für die zum Wagen 6 führenden Kabel aufweist.

Nicht dargestellt sind zusätzliche Schaltnocken auf der Schiene 5, durch die ein Wegfahren und erneutes Heranfahren der Behandlungseinrichtung 14 von der Stoßstange 2 und zurück zu ihr gesteuert werden kann. Das ist erforderlich, wenn in der Stoßstange 2 beispielsweise Durchbrechungen für die Montage von Blinkern vorgesehen sind.

**Patentansprüche**

1.    Vorrichtung zur Oberflächenbehandlung einer Kraftfahrzeugstoßstange (2) mittels einer Behandlungseinrichtung, (14) insbesondere einer Koronaentladungseinrichtung, gekennzeichnet durch einen Tisch (1) zum Aufspannen der Stoßstange (2) in eine mit ihren beiden Seitenteilen (3, 4) nach unten weisende Position und eine in etwa entsprechend der Stoßstange (2) verlaufende Schiene (5) mit einem die Behandlungseinrichtung (14) tragenden, angetriebenen Wagen (6), welcher einen quer zur Haupterstreckungsrichtung der Schiene (5) verschieblichen, die Behandlungseinrichtung (14) tragenden Schlitten (7) und einen Fühler (13) zum Steuern des Abstandes des Schlittens (7) und damit der Behandlungseinrichtung (14) von der Stoßstange (2) aufweist.

2. Vorrichtung nach Anspruch 1, dadurch gekennzeichnet, daß der Fühler (13) einen entlang der Stoßstange (2) verschieblichen, ein Potentiometer (31) betätigenden Fühlfinger hat.

3. Vorrichtung nach den Ansprüchen 1 oder 2, dadurch gekennzeichnet, daß die Schiene (5) als mit ihren beiden Enden auf dem Boden stehende Brücke ausgebildet ist.

4. Vorrichtung nach zumindest einem der vorangehenden Ansprüche, dadurch gekennzeichnet, daß der Tisch (1) eine mittels zweier Kniehebel (16, 17) höhenverfahrbare Tischplatte (15) aufweist.

5. Vorrichtung nach Anspruch 4, dadurch gekennzeichnet, daß die beiden Kniehebel (16, 17) von einer gemeinsamen Spindel (18) betätigbar sind, welche an ihren beiden, die Kniehebel (16, 17) betätigenden Enden Gewinde mit unterschiedlichem Drehsinn aufweist.

6. Vorrichtung nach zumindest einem der vorangehenden Ansprüche, dadurch gekennzeichnet, daß an beiden Seiten des Tisches (1) im Bereich der Enden der Stoßstange (2) Auflaufbleche (20, 21) zum Abstützen des Fühlers (13) nach überfahren des jeweiligen Stoßstangenendes vorgesehen sind und daß auf der Schiene (5) zum Abschalten der Vorschubbewegung des Wagens (6) im Bereich beider Stoßstangenenden jeweils ein entlang der Schiene (5) verstellbarer Näherungsschalter (22, 23) vorgesehen ist.

7. Vorrichtung nach zumindest einem der vorangehenden Ansprüche, dadurch gekennzeichnet, daß in Richtung jeden Endes der Stoßstange (2) gesehen jeweils hinter jedem Näherungsschalter (22, 23) ein Endschalter (24, 25) auf der Schiene (5) vorgesehen ist.

8. Vorrichtung nach zumindest einem der vorangehenden Ansprüche, dadurch gekennzeichnet, daß der Wagen (6) zum Verfahren entlang der Schienen (5) einen ein Ritzel (33) antreibenden Vorschubmotor (32) aufweist und das Ritzel (33) in eine entlang der Schiene (5) geführte Zahnstange (34) eingreift.

9. Vorrichtung nach zumindest einem der vorangehenden Ansprüche, dadurch gekennzeichnet, daß der Schlitten (7) mittels eines Stellmotores (12) quer zur Schiene (5) verfahrbar ist.

10. Vorrichtung nach zumindest einem der vorangehenden Ansprüche, dadurch gekennzeichnet, daß der Stellmotor (12) fest auf dem Schlitten (7) angeordnet ist und eine relativ zum Schlitten (7) unverschiebbare Hubspindel antreibt, welche in eine am Wagen (6) unverschiebbar befestigte Spindelmutter geschraubt ist.

**Claims**

1. Device for the surface treatment of a motor vehicle bumper (2) by means of a treatment device (14), in particular a corona discharge device, characterised by a table (1) for fixing the bumper (2) in a position in which its two lateral parts (3, 4) point downwardly and a rail (5), extending substantially according to the bumper (2), with a driven carriage (6) which carries the treatment device (14) and has a slider (7) which is displacable transversely to the main span of the rail (5) and carries the treatment device (14) and a probe (13) for controlling the distance of the slider (7) and therefore of the treatment device (14) from the bumper (2).

2. Device according to claim 1, characterised in that the probe (13) has a probe finger which is displacable along the bumper (2) and actuates a potentiometer (31).

3. Device according to claims 1 or 2, characterised in that the rail (5) is designed as a bridge standing with both its ends on the ground.

4. Device according to at least one of the preceding claims, characterised in that the table (1) has a table panel (15) which is vertically movable by means of two knee levers (16, 17).

5. Device according to claim 4, characterised in that the two knee levers (16, 17) are actuable by a common spindle (18) which has a thread with turns in different directions at its two ends actuating the knee levers (16, 17).

6. Device according to at least one of the preceding claims, characterised in that run-on metal sheets (20, 21) for supporting the probe (13) after the respective bumper end has been travelled over are provided on both sides of the table (1) in the region of the ends of the bumper (2) and in that a respective proximity switch (22, 23) which is adjustable along the rail (5) is provided on the rail (5) for switching off the advance movement of the carriage (6) in the region of the two bumper ends.

7. Device according to at least one of the preceding claims, characterised in that a limit switch (24, 25) is provided on the rail (5) after each respective proximity switch (22, 23), as viewed in the direction of each end of the bumper (2).

8. Device according to at least one of the preceding claims, characterised in that the carriage (6) for moving along the rails (5) has an advance motor (32) driving a pinion (33) and the pinion (33) engages in a rack (34) guided along the rail (5).

9. Device according to at least one of the preceding claims, characterised in that the slider (7) is movable transversely to the rail (5) by means of a servomotor (12).

10. Device according to at least one of the preceding claims, characterised in that the sevomotor (12) is arranged rigidly on the slider (7) and drives a lifting spindle which is non-displacable relative to the slider (7) and is screwed into a spindle nut fastened non-dispacably on the carriage (6).

**Revendications**

1. Appareil pour le traitement de surface d'un pare-chocs d'automobile (2) au moyen d'une installation de traitement (14), en particulier d'une installation de décharge à effet corona, caractérisé par une table (1) pour le montage du pare-chocs (2) dans une position avec ses deux parties latérales (3, 4) dirigées vers le bas et un rail (5) dispose de manière approximativement correspondante à celle du pare-chocs (2) avec un chariot commandé (6) portant l'installation de traitement (14), qui comporte un glissoir (7) déplaçable transversalement à la direction d'étendue principale du rail (5), portant l'installation de traitement (14) et un détecteur (13) pour commander la distance du glissoir (7) et ainsi de l'installation de traitement (14) par rapport au pare-chocs (2).

2. Appareil selon la revendication 1 caractérisé en ce que le détecteur (13) comporte un doigt détecteur déplaçable le long du pare-chocs (2), commandant un potentiomètre (31).

3. Appareil selon les revendications 1 ou 2 caractérisé en ce que le rail (5) est agencé en pont avec ses deux extrémités placées sur le sol.

4. Appareil selon au moins une des revendications précédentes caractérisé en ce que la table (1) est munie d'une plaque de table (15) déplaçable en hauteur au moyen de deux leviers à genouillère (16, 17).

5. Appareil selon la revendication 4 caractérisé en ce que les deux leviers à genouillère (16, 17) sont actionnables par une tige filetée commune (18) qui comporte à ses deux extrémités commandant les leviers à genouillère (16, 17) des filetages à sens de rotation différents.

6. Appareil selon au moins une des revendications précédentes caractérisé en ce qu'aux deux côtés de la table (1) dans la zone des extrémités du pare-chocs (2) on prévoit des tôles de contact (20, 21) pour l'appui du détecteur (13) après passage au-dessus de chacune des extrémités de pare-chocs et on prévoit sur le rail (5) dans la zone des deux extrémités de pare-chocs respectivement des détecteurs de proximité (22, 23) déplaçables le long du rail (5) pour l'arrêt du mouvement d'avance du chariot (6).

7. Appareil selon au moins une des revendications précédentes caractérisé en ce qu'on prévoit, vus dans la direction de chacune des extrémités du pare-chocs (2), des interrupteurs de fin de coure (24, 25) respectivement derrière chacun des détecteurs de proximité (22, 23) sur le rail (5).

8. Appareil selon au moins une des revendications précédentes caractérisé en ce que le chariot (6) est muni pour son déplacement le long du rail (5) d'un moteur d'avance (32) commandant un pignon (33) et que ce pignon (33) engrène avec une crémaillère (34) disposée le long du rail (5).

9. Appareil selon au moins une des revendications précédentes caractérisé en ce que le glissoir (7) est déplaçable transversalement au rail (5) au moyen d'un moteur de positionnement (12).

10. Appareil selon au moins une des revendications précédentes caractérisé en ce que le moteur de positionnement (12) est monté fixement sur le glissoir (7) et qu'il entraîne une vis de montée non translatable relativement au glissoir (7) qui est en prise avec un écrou fixé immobile en translation sur le chariot (6).

Fig. 1

EP 0 304 832 B1

Fig. 2